# EUROPEAN PATENT SPECIFICATION

(11) **EP 3 318 807 B1**
(45) Date of publication and mention of the grant of the patent: **01.04.2020**
(21) Application number: 17197975.0
(22) Date of filing: 24.10.2017
(51) Int. Cl.: F24F 7/08, F24F 11/00, F24F 11/30, F24F 11/48, F24F 11/62, H04L 29/12, F24F 13/14

(54) **METHOD FOR DETECTING CONFIGURATION OF A VENTILATION SYSTEM AND A VENTILATION SYSTEM**
VERFAHREN ZUR ERKENNUNG DER KONFIGURATION EINES BELÜFTUNGSSYSTEMS SOWIE EIN BELÜFTUNGSSYSTEM
PROCÉDÉ DE DÉTECTION DE CONFIGURATION D'UN SYSTÈME DE VENTILATION ET SYSTÈME DE VENTILATION

(30) Priority: 08.11.2016 FI 20165836
(43) Date of publication of application: 09.05.2018
(73) Proprietor: Climecon OY, 00880 Helsinki (FI)
(72) Inventor: Airas, Anssi, 00880 Helsinki (FI); Huuskonen, Esa, 00880 Helsinki (FI); Lehtovaara, Sami, 00880 Helsinki (FI)
(74) Representative: Berggren Oy, Helsinki & Oulu

(56) References cited:
- US-A- 5 602 758
- US-A- 5 853 123
- US-A1- 2004 186 599
- US-A1- 2011 284 091

## Description

The invention relates to a method for detecting the configuration of a ventilation system, the ventilation system comprising a control apparatus, a first subsystem, which first subsystem contains a first ventilation unit with an exhaust fan, a first exhaust air duct connected to the exhaust fan, the ends of the exhaust air duct being led to premises and the ends being provided with exhaust air valves, and in which method exhaust air valves in the premises are detected. The invention further relates to a ventilation system.

The ventilation of buildings is most often managed by mechanical ventilation systems, with which fresh air is supplied to the interior of the building along inlet ducts and exhaust air is removed from the building along exhaust ducts. Air is made to move in the ducts by means of blowing and suction produced by the ventilation unit. At the ends of the inlet ducts there are provided adjustable inlet air valves and at the ends of the exhaust ducts there are provided adjustable exhaust air valves. By adjusting the position of the valves, the quantity of air flowing through the valve can be set to a desired level. For the moisture-technical functionality of the building it is important to carry out the ventilation so that the building stays slightly underpressurized in all situations.

In known ventilation systems inlet and exhaust valves are manually adjustable valves, which are set to a certain position in connection with so-called balancing performed in the implementation step of the ventilation system. The inlet and exhaust valves are intended to be maintained in this position through the entire time of use of the building. If the ventilation in the building needs to be boosted or reduced, this is done by altering the blowing or suction capacity of the ventilation unit.

Before the actual balancing, the valves belonging to the air duct of the blower in each system, i.e. the configuration of the ventilation system must be detected. Traditionally, this has been done by studying the building's ventilation systems and/or flow graphs. Especially in large buildings there may be several ventilation units with several inlet and exhaust fans. Each fan is connected to an own air duct, the ends of which are led to premises or rooms in different parts and floors of the building. In these cases, detecting the configuration of the ventilation system can be slow and laborious. If an error occurs in the detection of the configuration; for example, if a valve is interpreted to belong to an incorrect ventilation duct, this error makes the balancing to be performed at a later stage considerably more difficult.

Document US2004/0186599 A1 discloses a system and method for model-based control of a building fluid distribution system. The system is used to regulate the temperature and flow of air throughout a building.

It is an object of the invention to introduce a method for detecting the configuration of ventilation and a ventilation system, with which problems related to the prior art can be eliminated. The objects of the invention are achieved with a detection method and ventilation system, which are characterized in what is presented in the independent patent claims. Some advantageous embodiments of the invention are presented in the dependent patent claims.

The invention relates to a method for detecting the configuration of a ventilation system. The ventilation system comprises a control apparatus and a first subsystem, which includes a first ventilation unit with an exhaust fan. The first subsystem further includes a first exhaust air duct connected to the exhaust fan, the ends of the exhaust air duct being led to premises and provided with an exhaust air valve. In the method, the exhaust air valves in the premises are detected. In the detection, an individualizing identifier is determined for at least part of the exhaust air valves, the exhaust fan of the first ventilation unit is switched on, the exhaust air valves installed into the first exhaust air duct are adjusted to the first flow position, and reference pressure values are determined for the exhaust air valve adjusted to the first flow position by measuring the pressure differences over the said exhaust air valves. After this, one exhaust air valve in the first premise connected to the first exhaust air duct is adjusted to the second flow position, in which second flow position air flow through the valve is substantially bigger than in the first flow position, pressure differences are measured over the exhaust air valves in the first flow position and the measured pressure differences are compared with the reference pressure values of the said exhaust air valves. Adjusting one exhaust air valve to the second flow position leads to the increase of negative pressure in this premise so that the exhaust air valve adjusted to the second flow position impacts all pressure differences in the same premise with this valve, measured over the valves in the first flow position. The exhaust air valves in the first flow position, the measured pressure difference of which deviates substantially from the reference pressure values, are defined as valves in the first premise, and they are given the same premise data as the exhaust air valve in the second flow position. The identifiers of exhaust air valves that obtained the same premise data are transmitted to the control apparatus. The premise can be, for example, one apartment in a block of flats or a terraced house.

Measuring the pressure difference over an exhaust air valve can be performed by measuring the prevailing atmospheric pressure in front of and behind the valve and by calculating the difference between these measuring results. In this case, the first measurement is carried out from room premises, the second measurement from the ventilation duct. Alternatively, the pressure difference can be measured over a movable adjusting part adjusting the size of an air flow aperture, a so-called fire damper so that the first measuring point is practically inside the exhaust valve on the side of the room space of the fire damper, and the second measuring point is on the side of the exhaust duct of the fire damper. The measurements carried out by these two different ways can render slightly different measuring results. In the method, all pressure difference measurements are made in the same way so that the measuring results are comparable with each other.

In an advantageous embodiment of the method of the invention one exhaust air valve from each premise is in turn adjusted to the second flow position, the exhaust air valves, the pressure difference of which deviates substantially from the reference pressure value adjusted to the first flow position are determined as valves in the same premise, and they are given the same premise value as the exhaust air valves adjusted to the second flow position, and the identifiers with the same premise data are transmitted to the control apparatus. When one exhaust air valve in turn has been opened from each premise and the above-mentioned pressure difference measurements have been made, the premise data of all exhaust air valves has been transmitted to and saved in the control apparatus.

In the method, preferably at least one second exhaust air valve from each premise is in turn adjusted to the second flow position, the exhaust air valves in the same premise with the said second exhaust air valve adjusted to the second flow position are determined and they are given the same premise data, and the identifiers of the exhaust air valves with the same premise data are transmitted to the control apparatus. In the control apparatus, the premise data of the exhaust air valve set in connection with the determining made in the first premise is compared with the premise data of the exhaust air valve set in connection with the determining of the second premise. The comparison is made to check the determinations made. The premise data of the exhaust air valves should be identical in both cases in the comparison.

In a second advantageous embodiment of the method of the invention the said ventilation system further comprises at least one second subsystem, which includes a second ventilation unit with an exhaust fan. To the exhaust fan of the second ventilation unit there is connected a second exhaust air duct, the ends of which are led to premises and provided with an exhaust air valve. In the method, the premise data of exhaust air valves installed to the ends of the second exhaust air duct is determined in the same way as in the first subsystem.

When the ventilation system includes more than one subsystem, i.e. more than one ventilation unit, it is appropriate to start detecting the configuration of the system by detecting the exhaust air valves belonging to each subsystem. In a third advantageous embodiment of the invention the exhaust air valves belonging to the subsystem are detected so that all exhaust fans of the ventilation units in the ventilation system are switched on, the exhaust fan of the ventilation unit belonging to one subsystem is switched off, the pressure differences over all exhaust fans in the ventilation system or the flow velocity of exhaust air flowing or having flowed through the exhaust air valves are measured. Those exhaust air valves, the pressure difference or flow velocity of exhaust air of which is close to zero, are detected to belong to said one subsystem, and the identifiers of their exhaust air valves are transmitted to the control apparatus.

Alternatively, the detection of exhaust air valves as being part of a subsystem can be performed by first switching off the exhaust fans of all ventilation units in the ventilation system, switching on the exhaust fans of the ventilation units one at a time, measuring the pressure differences over all undetected exhaust air valves in the ventilation system or the flow velocity of exhaust air flowing or having flowed through undetected exhaust air valves. Those exhaust air valves, the pressure difference or flow velocity of exhaust air of which is clearly bigger than zero, are detected to belong to the same subsystem with the exhaust fan that was switched on last. Finally, the identifiers of the exhaust air valves detected to belong to said subsystem are transmitted to the control apparatus.

A first ventilation unit belonging to the first subsystem can also include an inlet fan, in which case a first inlet air duct connected to the inlet fan is part of the first subsystem, the ends of the first inlet air duct of which are led to the premises and provided with an inlet air valve. In this case, an individualizing identifier is determined for at least part of the inlet valves, the inlet fan of the first ventilation unit is switched on, the inlet air valves installed into the first inlet air duct are adjusted to the first flow position, and reference pressure values are determined for the inlet air valves adjusted to the first flow position by measuring the pressure differences over said inlet air valves. After this, one inlet air valve connected to said inlet air duct in the first premise is adjusted to the second flow position, in which the air flow through the valve is substantially bigger than in the first flow position, the pressure differences are measured over the inlet air valves adjusted to the first flow position, and the measured pressure differences are compared with the reference pressure values of said inlet air valves. Those inlet air valves adjusted to the first flow position, the measured pressure difference of which deviates substantially from the reference pressure value, are determined as inlet air valves in the same first premise, and they are given the same premise data as the inlet air valve adjusted to the second flow position. The identifiers of the inlet air valves with the same premise data are transmitted to the control apparatus.

A second ventilation unit belonging to the second subsystem can also include an inlet fan, in which case a second inlet air duct connected to the inlet fan is also part of the second subsystem, the ends of the second inlet air duct being led to the premises and provided with an inlet air valve. In the method, the premise data for inlet air valves installed into the ends of the second inlet air duct are determined in the same way as in the first subsystem.

In a fourth advantageous embodiment of the method of the invention, the inlet air valves in a subsystem are detected by switching on all inlet fans of the ventilation units in the ventilation system, switching off the inlet fan of the ventilation unit in one subsystem, measuring the pressure differences of all undetected inlet air valves in the ventilation system or the flow velocity of exhaust air flowing or having flowed through undetected inlet air valves, detecting the inlet air valves, the pressure difference or flow velocity of inlet air of which is close to zero as being part of said one subsystem, and transferring the identifiers of the inlet air valves detected as being part of said one subsystem to the control apparatus.

Alternatively, detecting the inlet valves as being part of a subsystem can be done by first switching off the inlet fans of all ventilation units in the ventilation system, switching on the inlet fans of the ventilation units one at a time, measuring the pressure differences over all undetected inlet air valves in the ventilation system or the flow velocity of inlet air flowing or having flowed through the undetected inlet air valves. The air inlet valves, the pressure difference or flow velocity of inlet air of which is clearly bigger than zero, are detected as being part of the same subsystem as the inlet fan switched on last. Finally, the identifiers of inlet air valves detected as part of said subsystem are transmitted to the control apparatus. Detecting the exhaust air valves and/or inlet air valves as part of a subsystem is preferably done before determining the premise data for the valves.

In yet another advantageous embodiment of the method of the invention, adjusting the exhaust air valves and/or inlet air valves in the ventilation system to the first flow position and the second flow position and the operation of the fans of the ventilation units are controlled by a control apparatus, which is part of the system.

Instead of measuring the pressure difference impacting over the exhaust air valve, the method can be implemented by measurements, in which there is measured the flow velocity of exhaust air flowing or having flowed through the exhaust air valve. In yet another advantageous embodiment of the method of the invention, instead of determining the reference pressure value there is determined the reference velocity value for the exhaust air valves adjusted to the first flow position by measuring the flow velocity of exhaust air flowing or having flowed through the valve, adjusting in turn one exhaust air valve connected to the exhaust air duct in each premise to the second flow position, in which the air flow through the valve is substantially bigger than in the first flow position, and measuring, instead of the pressure difference, the flow velocity of exhaust air flowing or having flowed through the exhaust air valve in the first flow position. The measured flow velocity is compared with the reference velocity values of the exhaust air valves. The exhaust air valves in the first flow position, the measured flow velocity of which deviates substantially from the reference velocity value are determined as valves being in the same premise with the exhaust air valve in the second flow position, and they are given the same premise data as the exhaust air valve in the second flow position. The identifiers of the exhaust air valves with the same premise data are transmitted to the control apparatus.

In a respective way, instead of the reference pressure value, a reference velocity value can be determined for the inlet air valves adjusted to the first flow position by measuring the flow velocity of the inlet air flowing or having flowed through the valve, adjusting in turn one inlet air valve connected to the inlet air duct in each premise to the second flow position, in which the air flow through the valve in the second flow position is substantially bigger than in the first flow position, and measuring, instead of the pressure difference, the flow velocity of the inlet air flowing or having flowed through the inlet air valves in the first flow position. This measured flow velocity is compared with the reference velocity valves for the inlet air valves. The inlet air valves in the first flow position, the measured flow velocity of which deviates substantially from the reference velocity value, are determined as valves being in the same premise with the inlet air valve in the second flow position, and they are given the same premise data as the inlet air valve in the second flow position. The identifiers of the inlet air valves with the same premise data are transmitted to the control apparatus. Measuring the pressure difference impacting over the valves makes it possible to close substantially entirely the air flow apertures of the exhaust air valves and/or inlet air valves in the first flow position. In this case, no air flows through the valves in the first flow position. Measuring the flow velocity of exhaust air or inlet air flowing or having flowed through the valves again requires that air can flow through the valve also when the valve is in the first flow position. In these embodiments of the method, the flow aperture of the valve cannot be closed entirely in the first flow position.

The ventilation system of a premise group of the invention comprises a control apparatus for controlling the operation of the system, at least one subsystem comprising a ventilation unit with an exhaust fan. The subsystem further includes an exhaust air duct connected to the exhaust fan, the ends of the exhaust air duct being led to the premises of the premise group and provided with a motorized exhaust air valve. The exhaust air valves have an identifier individualizing the valve, and the control apparatus has a memory for saving the data relating to the valves in the system. The ventilation system further comprises pressure measuring equipment for measuring the pressure difference impacting over the exhaust air valve and/or a flow indicator for measuring the flow velocity of exhaust air, and a data transmission connection for transferring control commands from the control apparatus to the valves in the system and for transferring measuring data from the valves to the control apparatus. The premise group can be, for example, a block of flats or a terraced house so that an individual premise of the premise group is one apartment of the building.

In an advantageous embodiment of the ventilation system of the invention said ventilation unit further includes an inlet fan and an inlet air duct connected to the inlet fan, the ends of the inlet air duct being led to the premises of the premise group and provided with a motorized inlet air valve. The inlet air valves have an identifier individualizing the valve. The ventilation system further comprises pressure measuring equipment for measuring the pressure difference impacting over the inlet air valve and/or a flow indicator for measuring the flow velocity of inlet air.

It is an advantage of the invention that it makes easier the detection of the configuration of the ventilation system especially in large objects comprising several ventilation units and several ventilation ducts independent from each other, such as blocks of flats and public buildings.

It is further an advantage of the invention that it minimizes the risk of errors occurring in the detection of the configuration of the system.

It is further an advantage of the invention that the configuration data obtained as the final result of the detection method makes possible the later balancing of the ventilation and the automation of the adjustment of the ventilation during its use.

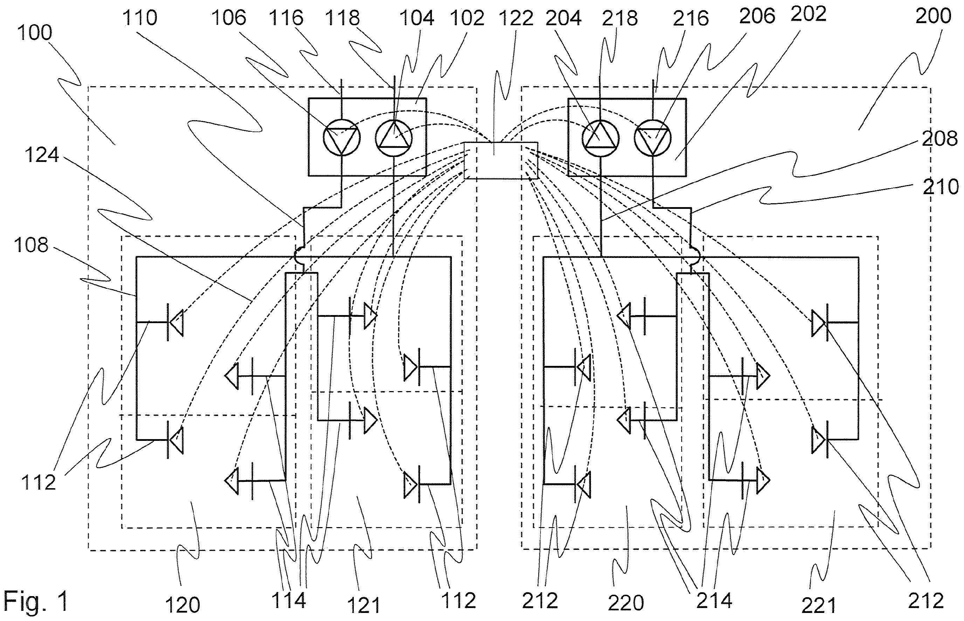

The invention is next described in detail. In the description it is referred to the drawing, in which
Figure 1 illustrates in an exemplary manner a ventilation system of the invention as a diagrammatic plan.

In Figure 1 there is illustrated in an exemplary manner a ventilation system of the invention as a diagrammatic plan. The ventilation system comprises two subsystems, the first subsystem 100 and the second subsystem 200. The first subsystem includes the first ventilation unit 102 with the exhaust fan 104 and inlet fan 106. The first exhaust air duct 108 is connected to the exhaust fan, and the first inlet air duct 110 is connected to the inlet fan. The ends of the exhaust air duct and the inlet air duct are led to the first premise 120 and second premise 121. The first and second premise illustrated in Figure 1 are individual apartments of a building, and they may comprise several rooms. The ends of the inlet air duct led to the rooms include the inlet air valve 114, and the ends of the exhaust air duct include the exhaust air valve 112. Fresh air is led in to the ventilation unit along the inlet pipe 116 and discharged from the unit along the exhaust pipe 118. All exhaust air valves and inlet air valves are provided with an identifier individualizing the valve and separating it from the other valves.

In a respective way, the second subsystem 200 contains the second ventilation unit 202, which has the exhaust fan 204 and inlet fan 206. The second exhaust air duct 208 is connected to the exhaust fan and the second inlet air duct 210 is connected to the inlet fan. The ends of the exhaust air duct and inlet air duct are led to the first and second premise 220, 221, i.e. to apartments of a building, which may comprise several rooms. At the ends of the inlet air duct led into the rooms there is the inlet valve 214 and at the ends of the exhaust air duct there is the exhaust air valve 212. Fresh air is led in to the ventilation unit along the inlet pipe 216 and discharged along the exhaust pipe 218.

The exhaust air valves 112, 212 and inlet air valves 114, 214 belonging to the ventilation system are motor valves, i.e. the size of the valve flow aperture is changed by means of a motor belonging to the valve. The exhaust and inlet air valves are further provided with pressure measuring elements for measuring the pressure difference over the valve, i.e. the difference between the atmospheric pressure impacting in the ventilation duct and the atmospheric pressure impacting in the room. The motors of the valves and measuring elements can be battery-driven devices so that they do not require mains current to operate. The control apparatus 122 belonging to the ventilation system is used to control the operation of the inlet fans 106, 206 and exhaust fans 104, 204 of the ventilation units 102, 202 of both subsystems and the operation of the motors of the exhaust air and inlet air valves belonging to both subsystems. Thus, the exhaust and inlet air valves are opened and closed by control commands supplied by the control apparatus. The exhaust air valves and inlet air valves as well as the exhaust fans and inlet fans are connected to the control apparatus with the wireless data transmission connection 124. The data transmission connection can be a radio network, WLAN network of a building, Bluetooth connection or Internet connection. In the latter case, the valves are provided with an IP address and connected to the Internet as a device of its own.

The control apparatus has a memory for saving the data, a processor, software for controlling the devices in the system, and user interfaces for entering and receiving the data. The control apparatus can be a separate computer belonging to the system, or the control apparatus can comprise software located in a so-called cloud server, which the user of the ventilation system can control by means of an application in a wireless terminal device, such as mobile phone.

In the method for detecting the configuration of a ventilation system of the invention it is first examined to which subsystem 100, 200 the exhaust air valves 112, 212 and inlet air valves 114, 214 in the premises 120, 121, 220, 221 belong. In the method, the exhaust fans of all ventilation units belonging to the ventilation system are switched on and the exhaust fan 104 of the first ventilation unit 102 belonging to the first subsystem 100 is switched off. After this, the pressure differences are measured over all exhaust air valves 112, 212 belonging to the ventilation system. The exhaust air valves, the pressure difference of which is close to zero, are detected to belong to the first subsystem, and the identifiers of these exhaust air valves are transmitted to the control apparatus 122. In a respective way, the exhaust air valves belonging to each second subsystem are detected so that the exhaust fans of all ventilation units belonging to the ventilation system are switched on, and the second exhaust fan 204 of the ventilation unit belonging to the second subsystem is switched off, and the pressure differences are measured over all undetected exhaust air valves belonging to the ventilation system. The exhaust air valves, the pressure difference of which is close to zero, are detected to belong to the second subsystem. The identifiers of the exhaust fans detected to belong to the second subsystem are transmitted to the control apparatus.

The inlet air valves belonging to the subsystems are detected in a respective manner. In the method, the inlet air fans 106, 206 of all ventilation units belonging to the ventilation system are switched on, the inlet fan of the ventilation unit belonging to the first subsystem is switched off, the pressure differences of all inlet air valves 114 belonging to the ventilation system are measured and the inlet air valves, the pressure difference of which is close to zero are detected to belong to the first subsystem 100. The identifiers of the inlet air valves detected to belong to the first subsystem are transmitted to the control apparatus 122. The inlet air valves belonging to the second subsystem are detected by switching off the inlet fan 206 of the second ventilation unit 202 belonging to the second subsystem, measuring the pressure differences of all undetected inlet air valves belonging to the ventilation system and the inlet air valves, the pressure difference of which is close to zero, are detected to belong to the second subsystem. The identifiers of the inlet air valves detected to belong to the second subsystem are transmitted to the control apparatus.

After the subsystem's detection step the control apparatus 122 knows which exhaust and inlet air valves belong to which subsystem, i.e. which exhaust air valves 112, 212 are connected to the first exhaust air duct 106 and which are connected to the second exhaust air duct 208, and which inlet air valves 114, 214 are connected to the first inlet air duct 110 and which are connected to the second inlet air duct 210. The control system utilizes this data when later controlling the operation of the valves and fans. The ventilation system illustrated in an exemplary manner in Figure 1 has two subsystems. There can be more than two subsystems, in which case the detection of the valves belonging to each subsystem is carried out with the principle described above by switching off in turn an exhaust or inlet fan of one subsystem. There can also be only one subsystem. In this case, the method does not need the subsystem's detection step described above.

Next it is detected in the method, which exhaust air valves in each subsystem are installed into the same premise, for example one apartment of a building. In the method the exhaust fan 104, 204 of the ventilation unit 102, 202 of the subsystem is switched on, the exhaust air valves 112, 212 installed in the exhaust air duct 108, 208 of the subsystem are switched off, and reference values are determined for the closed exhaust air valves by measuring the pressure differences over the said closed exhaust air valves. After this, one exhaust air valve connected to the exhaust air duct of the subsystem is opened in the premise 120, 220, pressure differences are measured again over the closed exhaust air valves and the measured pressure differences are compared with the reference values of said exhaust air valves. Opening one exhaust air valve in the premise changes the air pressure prevailing in the premise so that the pressure differences measured over the valves change. The closed exhaust air valves, the measured pressure difference of which deviates substantially from the reference value, are determined as exhaust air valves in the first premise 120, 220, and they are given the same premise value as the opened exhaust air valve. The identifiers of the exhaust air valves with the same premise data are transmitted to the control apparatus 122.

The detection is continued by opening one exhaust air valve 112 from the second premise 121, 221, by determining the closed exhaust air valves, the measured pressure difference of which deviates substantially from the reference value as valves in the same premise and by giving them the same premise data as the opened exhaust air valve. The identifiers of the exhaust air valves with the same premise data are transmitted to the control apparatus 122. In principle, by opening one exhaust air valve and by the subsequent measuring of pressure differences, all exhaust air valves in the same premise can be found out. The correctness of the determination made can, nevertheless, be ensured by closing the exhaust air valve opened first and by opening a second exhaust air valve in the same premise and by determining the valves in the same premise with the said second opened exhaust air valve. The premise data of valves determined in connection with the first opened exhaust air valve should be uniform with the premise data of valves determined in connection with the second opened exhaust air valve in the same premise. If for some reason the premise data are different, it is advisable to measure the pressure differences again.

Next it is examined which inlet air valves are installed into the same premise in each subsystem. The detection of inlet air valves to belong to a premise is carried out with the same principle as that of the exhaust air valves, i.e. switching on the inlet fan 106, 206 of the ventilation unit of the subsystem, closing the inlet air valves 114, 214 of the inlet air duct of the subsystem and determining the reference values for the closed inlet air valves by measuring the pressure differences over said closed inlet air valves. After this, one inlet air valve connected to the inlet air duct in the first premise 120, 220 is opened, the pressure differences are measured over the closed inlet air valves and the measured pressure differences are compared with said reference values for said inlet air valves. In the respective way as in the exhaust air valves, the opening of an inlet air valve in one premise affects the air pressure impacting in the premise in question so that the pressure differences measured over the closed inlet air valves in the premise change. The closed inlet air valves, the measured pressure difference of which deviates substantially from the reference value, are determined as inlet air valves in the same first premise, and they are given the same premise value as the opened inlet air valve. The identifiers of the inlet air valves with the same premise value are transmitted to the control apparatus. The correctness of the detection can be verified in the same way as with the exhaust air valves.

As the final result of the detection method the control apparatus has the data in which premises the inlet and exhaust air valves belonging to the system are located, i.e. the configuration of the ventilation system is saved in the control apparatus. The configuration data can be utilized in the balancing of the ventilation system and in the later adjusting of the ventilation system while in use.

Above there have been illustrated some advantageous embodiments of the method and ventilation system of the invention. The invention is not limited to the solutions described above, but only to the scope of the appending claims.

## Claims

1. Method for detecting the configuration of a ventilation system, the ventilation system comprising a control apparatus (122), a first subsystem (100), which first subsystem (100) contains a first ventilation unit (102), the ventilation unit comprising an exhaust fan (104), a first exhaust air duct (108) connected to the exhaust fan, the ends of the exhaust air duct of which are led to premises (120, 121, 220, 221) and an exhaust air valve (112, 212) has been installed into the ends, and in which method the exhaust air valves (112, 212) in the premises (120, 121, 220, 221) are detected, **characterized in that** in the method
- an individualizing identifier is determined for at least part of the exhaust air valves (112, 212);
- an exhaust fan (104) of the first ventilation unit (102) is switched on;
- the exhaust air valves (112) installed into the first exhaust air duct (108) are adjusted to the first flow position;
- pressure reference values are determined for the exhaust air valves (112) adjusted to the first flow position by measuring pressure differences over the said exhaust air valves (112);
- one exhaust air valve (112) connected to the first exhaust air duct (108) in the first premise (120) is adjusted to the second flow position, in which air flow through the valve is substantially bigger than in the first flow position;
- pressure differences are measured over the exhaust air valves (112) in the first flow position and the measured pressure differences are compared with the reference pressure values for the said exhaust air valves (112);
- the exhaust air valves (112) in the first flow position, the measured pressure difference of which deviates substantially from the reference pressure value, are determined as valves in the first premise (120), and they are given the same premise data as the exhaust air valve in the second flow position; and
- the identifiers of the exhaust air valves (112) with the same premise data are transmitted to the control apparatus (122).

2. Method according to claim 1, **characterized in that** in the method
- one exhaust air valve (112) from each premise (120, 121) is adjusted in turn to the second flow position;
- the exhaust air valves (112) adjusted to the first flow position, the pressure difference of which deviates substantially from the reference pressure value, are determined as valves in the same premise (120, 121), and they are given the same premise data as the exhaust air valve (112) adjusted to the second flow position; and
- the identifiers of the exhaust air valves (112) with the same premise data are transmitted to the control apparatus (122).

3. Method according to claim 1 or 2, **characterized in that** in the method
- at least one second exhaust air valve (112) from each premise (120, 121) is in turn adjusted to the second flow position;
- the exhaust air valves (112) in the same premise (120, 121) with the second exhaust air valve (112) adjusted to the second flow position are determined and they are given the same premise data;
- the identifiers of the exhaust air valves (112) with the same premise data are transmitted to the control apparatus (122), in which control apparatus (122)
- the premise data of the exhaust air valve (112) set in connection with the first determination made in the premise (120, 121) is compared with the premise data of the exhaust air valve (112) set in connection with the second determination made in the premise (120, 121).

4. Method according to any of the claims 1-3, **characterized in that** said ventilation system further comprises at least one second subsystem (200), which second subsystem contains a second ventilation unit (202), which second ventilation unit comprises an exhaust fan (204), a second exhaust air duct (210) connected to the exhaust fan (204) of the second ventilation unit (202), the ends of the second exhaust air duct (210) being led to premises (220, 221) and provided with an exhaust air valve (212); and that in the method the premise data for the exhaust air valves (212) installed into the ends of the second exhaust air duct (210) are determined in the respective way as in the first subsystem (100).

5. Method according to claim 4, **characterized in that** in the method
- exhaust air valves (112) belonging to the subsystem (100) are detected by
- switching on the exhaust fans (104, 204) of all ventilation units (102, 202) belonging to the ventilation system;
- switching off the exhaust fan (104) of the ventilation unit belonging to one subsystem (100);
- measuring the pressure differences over all exhaust air valves (112, 212) belonging to the ventilation system or the flow velocity of exhaust air flowing or having flowed through the exhaust air valve (112, 212);
- detecting the exhaust air valves (112, 212), the pressure difference or flow velocity of exhaust air of which is close to zero, as belonging to said one subsystem (100); and
- transferring the identifiers of the exhaust air valves (112) detected to belong to said one subsystem (100) to the control apparatus (122).

6. Method according to claim 4, **characterized in that** in the method
- the exhaust air valves (212) belonging to the subsystem (200) are detected by
- first switching off the exhaust fans (104, 204) of all ventilation units (102, 202) belonging to the ventilation system;
- switching on the exhaust fans (104, 204) of the ventilation units (102, 202) one at a time;
- measuring the pressure differences over all undetected exhaust air valves (112, 212) belonging to the ventilation system or the flow velocity of exhaust air flowing or having flowed through the undetected exhaust air valves (112, 212);
- detecting the exhaust air valves (112, 212), the pressure difference or flow velocity of exhaust air of which is clearly bigger than zero, as belonging to the same subsystem with the exhaust fan (104, 204) switched on last;
- transferring the identifiers of the exhaust air valves (212) detected to belong to said subsystem (200) to the control apparatus (122).

7. Method according to any of the claims 1-6, **characterized in that** said first ventilation unit (102) further includes an inlet fan (106) and the first subsystem (100) further includes a first inlet air duct (110) connected to the inlet fan (116), the ends of the inlet air duct (110) having been led to premises (120, 121) and an inlet air valve (114) having been installed into the ends, and that in the method
- an individualizing identifier is determined for at least part of the inlet valves (114);
- the inlet fan (106) of the first ventilation unit (102) is switched on;
- the inlet air valves (114) installed into the first inlet air duct (110) are adjusted to a first flow position;
- reference pressure values are determined for the inlet air valves (114) adjusted to the first flow position by measuring pressure differences over the said inlet air valves (114);
- one inlet air valve (114) connected to said inlet air duct (110) in the first premise (120) is adjusted to a second flow position, in which air flow through the valve is substantially bigger than in the first flow position;
- pressure differences are measured over the inlet air valves (114) adjusted to the first flow position and the measured pressure differences are compared with the reference pressure values of said inlet air valves (114); and
- the inlet air valves (114) adjusted to the first flow position, the measured pressure difference of which deviates substantially from the reference pressure value, are determined as inlet air valves (114) in the same first premise (120), and they are given the same premise value as the inlet air valves (114) adjusted to the second flow position; and
- the identifiers of the air inlet valves (114) with the same premise data are transmitted to the control apparatus (122).

8. Method according to any of the claims 4-7, **characterized in that** said second ventilation unit (202) further includes an inlet fan (206), and the second subsystem (200) further includes a second inlet air duct (210) connected to the inlet fan (206) of the second ventilation unit (202), the ends of the inlet air duct (210) being led to premises (220, 221), and an inlet air valve (214) being installed into the ends; and that in the method premise data for the inlet air valves (214) installed to the ends of the second inlet air duct (210) is determined in the respective way as in the first subsystem (100).

9. Method according to any of the claims 4-8, **characterized in that** in the method
- the inlet air valves belonging to the subsystem (100) are detected by
- switching on all inlet fans (106, 206) of the ventilation units (102, 104) belonging to the ventilation system;
- switching off the inlet fan (106) of the ventilation unit (102) belonging to one subsystem (100);
- measuring the pressure differences over all undetected inlet air valves (114, 214) belonging to the ventilation system or the flow velocity of exhaust air flowing or having flowed through the undetected inlet air valves (114, 214);
- detecting the inlet air valves (114, 214), the pressure difference or flow velocity of exhaust air of which is close to zero, as belonging to said one subsystem (100); and
- transferring the identifiers of the inlet air valves (114) detected to belong to said one subsystem (100) to the control apparatus (122).

10. Method according to any of the claims 4-8, **characterized in that** in the method
- the inlet air valves (114, 214) belonging to the subsystem (200) are detected by
- first switching off all inlet fans (106, 206) of the ventilation units (102, 202) belonging to the ventilation system;
- switching on the inlet fans (106, 206) of the ventilation units (102, 202) one at a time;
- measuring the pressure differences over all undetected inlet air valves (114, 214) belonging to the ventilation system or the flow velocity of inlet air flowing or having flowed through the undetected air flow valves (114, 214);
- detecting the inlet air valves (114, 214), the pressure difference or flow velocity of inlet air of which is clearly bigger than zero, as belonging to the same subsystem with the inlet fan (106, 206) switched on last;
- transferring the identifiers of the inlet air valve (214) detected to belong to the said subsystem (100, 200) to the control apparatus (122).

11. Method according to any of the claims 5-10, **characterized in that** the detection of the exhaust air valves (112, 212) and/or inlet air valves (114, 214) as belonging to a subsystem (100, 200) is made before the determination of the premise data for the valves (112, 212, 114, 214).

12. Method according to any of the claims 1-11, **characterized in that** the adjustment of the exhaust air valves (112, 212) and/or inlet air valves (114, 214) belonging to the ventilation system to the first flow position and the second flow position and the operation of the fans (104, 204, 106, 206) of the ventilation units (102, 202) are controlled by the control apparatus (122) belonging to the system.

13. Method according to any of the claims 1-12, **characterized in that**
- instead of the reference pressure value, a reference velocity value is determined for the exhaust air valves (112, 212) adjusted to the first flow position by measuring the flow velocity of exhaust air flowing or having flown through the valve;
- adjusting in turn in each premise (120, 121, 220, 221) one exhaust air valve (112, 212) connected to the exhaust air duct (108, 208) to the second flow position, in which air flow through the valve is substantially bigger than in the first flow position;
- instead of the reference pressure value, the flow velocity of exhaust air flowing or having flowed through the exhaust air valves (112, 212) in the first flow position is measured and the measured flow velocity is compared with the reference velocity values for the exhaust air valves (112, 212); and
- the exhaust air valves (112, 212) in the first flow position, the measured flow velocity of which deviates substantially from the reference velocity value, are determined as valves in the same premise (120, 121, 220, 221) with the exhaust air valve (112, 212) in the second flow position, and they are given the same premise value as the exhaust air valve in the second flow position; and
- the identifiers of the exhaust air valves (112, 212) with the same premise data are transmitted to the control apparatus (122).

14. Method according to any of the claims 7-13, **characterized in that**
- instead of the reference pressure value, a reference velocity value is determined for the inlet air valves (114, 214) adjusted to the first flow position by measuring the flow velocity of inlet air flowing or having flowed through the valves;
- one inlet air valve (114, 214) connected to the inlet air duct (110, 210) is adjusted in turn in each premise (120, 121, 220, 221) to the second flow position, in which air flow through the valve is substantially bigger than in the first flow position;
- instead of measuring the pressure difference, the flow velocity of exhaust air flowing or having flowed through the inlet air valves (114, 214) in the first flow position is measured and the measured flow velocity is compared with the reference velocity values for the inlet air valves (114, 214); and
- the air inlet valves (114, 214) in the first flow position, the measured flow velocity of which deviates substantially from the reference velocity value, are determined as valves being in the same premise (120, 121, 220, 221) with the inlet air valve (114, 214) in the second flow position, and they are given the same premise value as the inlet air valve in the second flow position; and
- the identifiers of the inlet air valves (114, 214) with the same premise data are transmitted to the control apparatus (122).

15. Method according to any of the claims 1-12, **characterized in that** the air flow aperture is closed substantially entirely in the exhaust air valves (112, 212) and/or inlet air valves (114, 214) adjusted to the first flow position.

16. Ventilation system of a group of premises, the system comprising a control apparatus (122) for controlling the operation of the system, at least one subsystem (100, 200), which subsystem (100, 200) includes a ventilation unit (102, 202) with an exhaust fan (104, 204), an exhaust air duct (108, 208) connected to the exhaust fan (104, 204), the ends of the exhaust air duct (108, 208) having been led to the premises of the premise group (120, 121, 220, 221) and a motorized exhaust air valve (112, 212) having been installed into the ends, **characterized in that**
- the exhaust air valves (112, 212) are provided with an identifier individualizing the valve;
- the control apparatus (122) has a memory for recording data relating to the valves in the system;
- the control apparatus (122) performing the method steps of any of the claims 1 to 15
- and that
- the ventilation system further includes
- pressure measuring elements for measuring the pressure difference impacting over the exhaust air valve and/or a flow indicator for measuring the flow velocity of exhaust air; and
- a data transmission connection (124) for transferring control commands from the control apparatus (122) to the valves and for transferring the measuring data from the valves to the control apparatus (122).

17. Ventilation system according to claim 16, **characterized in that**
- said ventilation unit (102, 202) further has an inlet fan (106, 206);
- an inlet air duct (110, 210) connected to the inlet fan (106, 206), the ends of the inlet air duct (110, 210) having been led to the premises of the premise group (120, 121, 220, 221), and a motorized inlet air valve (114, 214) having been installed into the ends;
- the inlet air valves (114, 214) have an identifier individualizing the valve; and
- the ventilation system further includes pressure measuring elements for measuring the pressure difference impacting over the inlet air valve and/or a flow indicator for measuring the flow velocity of inlet air.

## Patentansprüche

1. Verfahren zum Erkennen der Konfiguration eines Belüftungssystems, wobei das Belüftungssystem eine Steuervorrichtung (122) und ein erstes Untersystem (100) umfasst, wobei das erste Untersystem (100) eine erste Belüftungseinheit (102) enthält, wobei die Belüftungseinheit einen Abluftventilator (104) und einen ersten, mit dem Abluftventilator verbundenen Abluftkanal (108) umfasst, dessen Enden zu Räumlichkeiten (120, 121, 220, 221) geführt sind und in die Enden ein Abluftventil (112, 212) installiert ist, und wobei bei dem Verfahren die Abluftventile (112, 212) in den Räumlichkeiten (120, 121, 220, 221) erkannt werden, **dadurch gekennzeichnet, dass** bei dem Verfahren
- eine individualisierende Kennung für mindestens einen Teil der Abluftventile (112, 212) bestimmt wird;
- ein Abluftventilator (104) der ersten Belüftungseinheit (102) eingeschaltet wird;
- die in den ersten Abluftkanal (108) installierten Abluftventile (112) auf die erste Durchflussstellung eingestellt werden;
- Druckreferenzwerte für die auf die erste Durchflussstellung eingestellten Abluftventile (112) durch Messen von Druckdifferenzen über die Abluftventile (112) bestimmt werden;
- ein mit dem ersten Abluftkanal (108) in der ersten Räumlichkeit (120) verbundenes Abluftventil (112) auf die zweite Durchflussstellung eingestellt wird, in der der Luftstrom durch das Ventil wesentlich größer als in der ersten Durchflussstellung ist;
- Druckdifferenzen über die Abluftventile (112) in der ersten Durchflussstellung gemessen und die gemessenen Druckdifferenzen mit den Referenzdruckwerten für die Abluftventile (112) verglichen werden;
- die Abluftventile (112) in der ersten Durchflussstellung, deren gemessene Druckdifferenz wesentlich von dem Referenzdruckwert abweicht, als Ventile in der ersten Räumlichkeit (120) bestimmt werden und ihnen dieselben Räumlichkeitsdaten wie dem Abluftventil in der zweiten Durchflussstellung gegeben werden; und
- die Kennungen der Abluftventile (112) mit den gleichen Räumlichkeitsdaten an die Steuervorrichtung (122) übertragen werden.

2. Verfahren nach Anspruch 1, **dadurch gekennzeichnet, dass**
- bei dem Verfahren ein Abluftventil (112) aus jeder Räumlichkeit (120, 121) nacheinander auf die zweite Durchflussstellung eingestellt wird;
- die auf die erste Durchflussstellung eingestellten Abluftventile (112), deren Druckdifferenz wesentlich von dem Referenzdruckwert abweicht, als Ventile in derselben Räumlichkeit (120, 121) bestimmt werden und ihnen dieselben Räumlichkeitsdaten wie dem auf die zweite Durchflussstellung eingestellten Abluftventil (112) gegeben werden; und
- die Kennungen der Abluftventile (112) mit den gleichen Räumlichkeitsdaten an die Steuervorrichtung (122) übertragen werden.

3. Verfahren nach Anspruch 1 oder 2, **dadurch gekennzeichnet, dass** bei dem Verfahren
- mindestens ein zweites Abluftventil (112) aus jeder Räumlichkeit (120, 121) nacheinander auf die zweite Durchflussstellung eingestellt wird;
- die Abluftventile (112) in derselben Räumlichkeit (120, 121) mit dem zweiten, auf die zweite Durchflussstellung eingestellten Abluftventil (112) bestimmt werden und ihnen die gleichen Räumlichkeitsdaten gegeben werden;
- die Kennungen der Abluftventile (112) mit den gleichen Räumlichkeitsdaten an die Steuervorrichtung (122) übertragen werden, wobei in der Steuervorrichtung (122)
- die Räumlichkeitsdaten des Abluftventils (112), die in Verbindung mit der ersten, in der Räumlichkeit (120, 121) vorgenommenen Bestimmung eingestellt wurden, mit den Räumlichkeitsdaten des Abluftventils (112), die in Verbindung mit der zweiten, in der Räumlichkeit (120, 121) vorgenommenen Bestimmung eingestellt wurden, verglichen werden.

4. Verfahren nach einem der Ansprüche 1-3, **dadurch gekennzeichnet, dass** das Belüftungssystem ferner mindestens ein zweites Untersystem (200) umfasst, wobei das zweite Untersystem eine zweite Belüftungseinheit (202) enthält, wobei die zweite Belüftungseinheit einen Abluftventilator (204) und einen zweiten Abluftkanal (210) umfasst, der mit dem Abluftventilator (204) der zweiten Belüftungseinheit (202) verbunden ist, wobei die Enden des zweiten Abluftkanals (210) zu Räumlichkeiten (220, 221) geführt und mit einem Abluftventil (212) versehen sind; und dass in dem Verfahren die Räumlichkeitsdaten für die in die Enden des zweiten Abluftkanals (210) installierten Abluftventile (212) in der entsprechenden Weise wie im ersten Untersystem (100) bestimmt werden.

5. Verfahren nach Anspruch 4, **dadurch gekennzeichnet, dass** bei dem Verfahren
- zu dem Untersystem (100) gehörende Abluftventile (112) erkannt werden durch
- Einschalten der Abluftventilatoren (104, 204) aller zum Belüftungssystem gehörenden Belüftungseinheiten (102, 202);
- Ausschalten des Abluftventilators (104) der zu einem Untersystem (100) gehörenden Belüftungseinheit;
- Messen der Druckdifferenzen über alle zum Belüftungssystem gehörenden Abluftventile (112, 212) oder der Strömungsgeschwindigkeit der durch das Abluftventil (112, 212) strömenden oder geströmten Abluft;
- Erkennen der Abluftventile (112, 212), deren Druckdifferenz oder Strömungsgeschwindigkeit der Abluft nahe null ist, als zu dem einen Untersystem (100) gehörend;
- Übertragen der Kennungen der als zu dem einen Untersystem (100) gehörend erkannten Abluftventile (112) an die Steuervorrichtung (122).

6. Verfahren nach Anspruch 4, **dadurch gekennzeichnet, dass** bei dem Verfahren
- die zu dem Untersystem (200) gehörenden Abluftventile (212) erkannt werden durch
- erst Ausschalten der Abluftventilatoren (104, 204) aller zum Belüftungssystem gehörenden Belüftungseinheiten (102, 202);
- einzelnes Einschalten der Abluftventilatoren (104, 204) der Belüftungseinheiten (102, 202);
- Messen der Druckdifferenzen über alle zum Belüftungssystem gehörenden nicht erkannten Abluftventile (112, 212) oder der Strömungsgeschwindigkeit der durch die nicht erkannten Abluftventile (112, 212) strömenden oder geströmten Abluft;
- Erkennen der Abluftventile (112, 212), deren Druckdifferenz oder Strömungsgeschwindigkeit der Abluft deutlich größer als null ist, als zu demselben Untersystem gehörend, in dem der Abluftventilator (104, 204) zuletzt eingeschaltet wurde;
- Übertragen der Kennungen der als zu dem Untersystem (200) gehörend erkannten Abluftventile (212) an die Steuervorrichtung (122).

7. Verfahren nach einem der Ansprüche 1-6, **dadurch gekennzeichnet, dass** die erste Belüftungseinheit (102) ferner einen Einlassventilator (106) und das erste Untersystem (100) ferner einen ersten Einlassluftkanal (110) aufweist, der mit dem Einlassventilator (116) verbunden ist, wobei die Enden des Einlassluftkanals (110) zu Räumlichkeiten (120, 121) geführt und ein Einlassluftventil (114) in die Enden installiert sind, und dass in dem Verfahren
- eine individualisierende Kennung für mindestens einen Teil der Einlassventile (114) bestimmt wird;
- ein Einlassventilator (106) der ersten Belüftungseinheit (102) eingeschaltet wird;
- die in den ersten Einlassluftkanal (110) installierten Einlassluftventile (114) auf eine erste Durchflussstellung eingestellt werden;
- Referenzdruckwerte für die auf die erste Durchflussstellung eingestellten Einlassluftventile (114) durch Messen von Druckdifferenzen über die Einlassluftventile (114) bestimmt werden;
- ein mit dem Einlassluftkanal (110) in der ersten Räumlichkeit (120) verbundenes Einlassluftventil (114) auf eine zweite Durchflussstellung eingestellt wird, in der der Luftstrom durch das Ventil wesentlich größer als in der ersten Durchflussstellung ist;
- Druckdifferenzen über die auf die erste Durchflussstellung eingestellten Einlassluftventile (114) gemessen werden und die gemessenen Druckdifferenzen mit den Referenzdruckwerten der Einlassluftventile (114) verglichen werden; und
- die auf die erste Durchflussstellung eingestellten Einlassluftventile (114), deren gemessene Druckdifferenz wesentlich von dem Referenzdruckwert abweicht, als Einlassluftventile (114) in derselben ersten Räumlichkeit (120) bestimmt werden, und ihnen derselbe Räumlichkeitswert wie den auf die zweite Durchflussstellung eingestellten Einlassluftventilen (114) gegeben wird; und
- die Kennungen der Einlassluftventile (114) mit den gleichen Räumlichkeitsdaten an die Steuervorrichtung (122) übertragen werden.

8. Verfahren nach einem der Ansprüche 4-7, **dadurch gekennzeichnet, dass** die zweite Belüftungseinheit (202) ferner einen Einlassventilator (206) aufweist und das zweite Untersystem (200) ferner einen zweiten Einlassluftkanal (210) aufweist, der mit dem Einlassventilator (206) der zweiten Lüftungseinheit (202) verbunden ist, wobei die Enden des Einlassluftkanals (210) zu Räumlichkeiten (220, 221) geführt sind und ein Einlassluftventil (214) in die Enden installiert ist; und dass in dem Verfahren Räumlichkeitsdaten für die an den Enden des zweiten Einlassluftkanals (210) installierten Einlassluftventile (214) in der entsprechenden Weise wie im ersten Untersystem (100) bestimmt werden.

9. Verfahren nach einem der Ansprüche 4-8, **dadurch gekennzeichnet, dass** bei dem Verfahren
- die zu dem Untersystem (100) gehörenden Einlassluftventile erkannt werden durch
- Einschalten aller Einlassventilatoren (106, 206) der zu dem Belüftungssystem gehörenden Belüftungseinheiten (102, 104);
- Ausschalten des Einlassventilators (106) der zu einem Untersystem (100) gehörenden Belüftungseinheit (102) ;
- Messen der Druckdifferenzen über alle zum Belüftungssystem gehörenden nicht erkannten Einlassluftventile (114, 214) oder der Strömungsgeschwindigkeit der durch die nicht erkannten Einlassluftventile (114, 214) strömenden oder geströmten Abluft;
- Erkennen der Einlassluftventile (114, 214), deren Druckdifferenz oder Strömungsgeschwindigkeit der Abluft nahe null ist, als zu dem einen Untersystem (100) gehörend;
- Übertragen der Kennungen der Einlassluftventile als zu dem einen Untersystem (100) gehörend erkannten Einlassluftventile (114) an die Steuervorrichtung (122).

10. Verfahren nach einem der Ansprüche 4-8, **dadurch gekennzeichnet, dass** bei dem Verfahren
- die zu dem Untersystem (200) gehörenden Einlassluftventile (114, 214) erkannt werden durch
- erst Ausschalten aller Einlassventilatoren (106, 206) der zum Belüftungssystem gehörenden Belüftungseinheiten (102, 202);
- einzelnes Einschalten der Einlassventilatoren (106, 206) der Belüftungseinheiten (102, 202);
- Messen der Druckdifferenzen über alle zum Belüftungssystem gehörenden nicht erkannten Einlassluftventile (114, 214) oder der Strömungsgeschwindigkeit der durch die nicht erkannten Luftstromventile (114, 214) strömenden oder geströmten Einlassluft;
- Erkennen der Einlassluftventile (114, 214), deren Druckdifferenz oder Strömungsgeschwindigkeit der Einlassluft deutlich größer als null ist, als zu demselben Untersystem gehörend, in dem der Einlassventilator (106, 206) zuletzt eingeschaltet wurde;
- Übertragen der Kennungen des als zu dem Untersystem (100, 200) gehörend erkannten Einlassluftventils (214) an die Steuervorrichtung (122).

11. Verfahren nach einem der Ansprüche 5-10, **dadurch gekennzeichnet, dass** die Erkennung der Abluftventile (112, 212) und/oder der Einlassluftventile (114, 214) als zu einem Untersystem (100, 200) gehörend vor der Bestimmung der Räumlichkeitsdaten für die Ventile (112, 212, 114, 214) erfolgt.

12. Verfahren nach einem der Ansprüche 1-11, **dadurch gekennzeichnet, dass** die Einstellung der zu dem Belüftungssystem gehörenden Abluftventile (112, 212) und/oder Einlassluftventile (114, 214) auf die erste Durchflussstellung und die zweite Durchflussstellung und der Betrieb der Ventilatoren (104, 204, 106, 206) der Belüftungseinheiten (102, 202) durch die zu dem System gehörende Steuervorrichtung (122) gesteuert werden.

13. Verfahren nach einem der Ansprüche 1-12, **dadurch gekennzeichnet, dass**
- anstelle des Referenzdruckwertes ein Referenzgeschwindigkeitswert für die auf die erste Durchflussstellung eingestellten Abluftventile (112, 212) durch Messen der Strömungsgeschwindigkeit der durch das Ventil strömenden oder geströmten Abluft bestimmt wird;
- Einstellen nacheinander in jeder Räumlichkeit (120, 121, 220, 221) eines mit dem Abluftkanal (108, 208) verbundenen Abluftventils (112, 212) auf die zweite Durchflussstellung, in der der Luftstrom durch das Ventil wesentlich größer als in der ersten Durchflussstellung ist;
- anstelle des Referenzdruckwertes die Durchflussgeschwindigkeit der durch die Abluftventile (112, 212) in der ersten Durchflussstellung strömenden oder geströmten Abluft gemessen wird und die gemessene Strömungsgeschwindigkeit mit den Referenzgeschwindigkeitswerten für die Abluftventile (112, 212) verglichen wird; und
- die Abluftventile (112, 212) in der ersten Durchflussstellung, deren gemessene Strömungsgeschwindigkeit wesentlich von dem Referenzgeschwindigkeitswert abweicht, als Ventile in derselben Räumlichkeit (120, 121, 220, 221) mit dem Abluftventil (112, 212) in der zweiten Durchflussstellung bestimmt werden und ihnen der gleiche Räumlichkeitswert wie dem Abluftventil in der zweiten Durchflussstellung gegeben wird; und
- die Kennungen der Abluftventile (112, 212) mit den gleichen Räumlichkeitsdaten an die Steuervorrichtung (122) übertragen werden.

14. Verfahren nach einem der Ansprüche 7-13, **dadurch gekennzeichnet, dass**
- anstelle des Referenzdruckwertes ein Referenzgeschwindigkeitswert für die auf die erste Durchflussstellung eingestellten Einlassluftventile (114, 214) durch Messen der Strömungsgeschwindigkeit der durch die Ventile strömenden oder geströmten Einlassluft bestimmt wird;
- ein mit dem Einlassluftkanal (110, 210) verbundenes Einlassluftventil (114, 214) nacheinander in jeder Räumlichkeit (120, 121, 220, 221) auf die zweite Durchflussstellung eingestellt wird, in der der Luftstrom durch das Ventil wesentlich größer als in der ersten Durchflussstellung ist;
- anstelle der Messung der Druckdifferenz die Strömungsgeschwindigkeit der durch die Einlassluftventile (114, 214) in der ersten Durchflussstellung strömenden oder geströmten Abluft gemessen wird und die gemessene Strömungsgeschwindigkeit mit den Referenzgeschwindigkeitswerten für die Einlassluftventile (114, 214) verglichen wird; und
- die Lufteinlassventile (114, 214) in der ersten Durchflussstellung, deren gemessene Strömungsgeschwindigkeit wesentlich von dem Referenzgeschwindigkeitswert abweicht, als Ventile bestimmt werden, die sich in derselben Räumlichkeit (120, 121, 220, 221) wie das Einlassluftventil (114, 214) in der zweiten Durchflussstellung befinden, und ihnen derselbe Räumlichkeitswert wie dem Einlassluftventil in der zweiten Durchflussstellung gegeben wird; und
- die Kennungen der Einlassluftventile (114, 214) mit denselben Räumlichkeitsdaten an die Steuervorrichtung (122) übertragen werden.

15. Verfahren nach einem der Ansprüche 1-12, **dadurch gekennzeichnet, dass** die Luftstromöffnung in den auf die erste Durchflussstellung eingestellten Abluftventilen (112, 212) und/oder Einlassluftventilen (114, 214) im Wesentlichen vollständig geschlossen wird.

16. Belüftungssystem einer Gruppe von Räumlichkeiten, wobei das System eine Steuervorrichtung (122) zum Steuern des Betriebs des Systems, mindestens ein Untersystem (100, 200), wobei das Untersystem (100, 200) eine Belüftungseinheit (102, 202) mit einem Abluftventilator (104, 204) aufweist, und einen mit dem Ablaufventilator (104, 204) verbundenen Abluftkanal (108, 208) aufweist, wobei die Enden des Abluftkanals (108, 208) zu den Räumlichkeiten der Räumlichkeitsgruppe (120, 121, 220, 221) geführt sind und ein motorisiertes Abluftventil (112, 212) in die Enden installiert ist, **dadurch gekennzeichnet, dass**
- die Abluftventile (112, 212) mit einer Kennung versehen sind, die das Ventil individualisiert;
- die Steuervorrichtung (122) einen Speicher zum Aufzeichnen von Daten bezüglich der Ventile im System aufweist;
- die Steuervorrichtung (122) die Verfahrensschritte eines der Ansprüche 1 bis 15 durchführt
- und dass
- das Belüftungssystem ferner aufweist
- Druckmesselemente zum Messen der über das Abluftventil wirkenden Druckdifferenz und/oder einen Strömungsanzeiger zum Messen der Strömungsgeschwindigkeit der Abluft; und
- eine Datenübertragungsverbindung (124) zum Übertragen von Steuerbefehlen aus der Steuervorrichtung (122) an die Ventile und zum Übertragen der Messdaten aus den Ventilen an die Steuervorrichtung (122).

17. Belüftungssystem nach Anspruch 16, **dadurch gekennzeichnet, dass**
- die Belüftungseinheit (102, 202) ferner einen Einlassventilator (106, 206) aufweist;
- ein Einlassventilator (106, 206) mit dem Einlassluftkanal (110, 210) verbunden ist, wobei die Enden des Einlassluftkanals (110, 210) zu den Räumlichkeiten der Räumlichkeitsgruppe (120, 121, 220, 221) geführt sind und ein motorisiertes Einlassluftventil (114, 214) in die Enden installiert ist;
- die Einlassluftventile (114, 214) eine das Ventil individualisierende Kennung aufweisen; und
- das Belüftungssystem ferner Druckmesselemente zum Messen der über das Einlassluftventil wirkenden Druckdifferenz und/oder einen Strömungsanzeiger zum Messen der Strömungsgeschwindigkeit der Einlassluft aufweist.

## Revendications

1. Procédé pour détecter la configuration d'un système de ventilation, ce système de ventilation comprenant un appareil de commande (122), un premier sous-système (100), lequel premier sous-système (100) contient une première unité de ventilation (102), cette unité de ventilation comprenant un ventilateur d'évacuation (104), un premier conduit d'évacuation d'air (108) relié au ventilateur d'évacuation, les extrémités du conduit d'évacuation d'air étant amenées jusqu'à des locaux (120, 121, 220, 221) et une soupape d'évacuation d'air (112, 212) ayant été installée dans ces extrémités, procédé dans lequel les soupapes d'évacuation d'air (112, 212) dans les locaux (120, 121, 220, 221) sont détectées, ce procédé étant **caractérisé en ce que**, dans ce procédé,
- un identificateur d'individualisation est déterminé pour au moins une partie des soupapes d'évacuation d'air (112, 212) ;
- un ventilateur d'évacuation (104) de la première unité de ventilation (102) est mis en marche ;
- les soupapes d'évacuation d'air (112) installées dans le premier conduit d'évacuation d'air (108) sont réglées dans la première position d'écoulement ;
- des valeurs de référence de pression sont déterminées pour les soupapes d'évacuation d'air (112) réglées dans la première position d'écoulement en mesurant les différences de pression entre lesdites soupapes d'évacuation d'air (112) ;
- une soupape d'évacuation d'air (112) reliée au premier conduit d'évacuation d'air (108) dans le premier local (120) est réglée dans la deuxième position d'écoulement, l'écoulement d'air à travers la soupape étant sensiblement plus grand que dans la première position d'écoulement ;
- les différences de pression sont mesurées entre les soupapes d'évacuation d'air (112) dans la première position d'écoulement et les différences de pression mesurées sont comparées avec des valeurs de pression de référence pour lesdites soupapes d'évacuation d'air (112) ;
- les soupapes d'évacuation d'air (112) dans la première position d'écoulement, dont ladite mesure de pression mesurée s'écarte sensiblement de la valeur de pression de référence, sont déterminées comme des soupapes dans le premier local (120), et elles se voient attribuer les même données de local que la soupape d'évacuation d'air dans la deuxième position d'écoulement ; et
- les identificateurs des soupapes d'évacuation d'air (112) avec les mêmes données de local sont transmises à l'appareil de commande (122).

2. Procédé selon la revendication 1, **caractérisé en ce que**, dans ce procédé,
- une soupape d'évacuation d'air (112) de chaque local (120, 121) est réglée tour à tour dans la deuxième position d'écoulement ;
- les soupapes d'évacuation d'air (112) réglées dans la première position d'écoulement, dont la différence de pression s'écarte sensiblement de la valeur de pression de référence, sont déterminées comme étant des soupapes dans le même local (120, 121), et elles se voient attribuer les mêmes données de local que la soupape d'évacuation d'air (112) réglée dans la deuxième position d'écoulement ; et
- les identificateurs des soupapes d'évacuation d'air (112) avec les mêmes données de local sont transmises à l'appareil de commande (122).

3. Procédé selon la revendication 1 ou 2, **caractérisé en ce que**, dans ce procédé,
- au moins une deuxième soupape d'évacuation d'air (112) de chaque local (120, 121) est réglée tour à tour dans la deuxième position d'écoulement ;
- les soupapes d'évacuation d'air (112) dans le même local (120, 121) avec la deuxième soupape d'évacuation d'air (112) réglée dans la deuxième position d'écoulement sont déterminées et elles se voient attribuer les mêmes données de local ;
- les identificateurs des soupapes d'évacuation d'air (112) avec les mêmes données de local sont transmises à l'appareil de commande (122), appareil de commande (122) dans lequel
- les données de local de la soupape d'évacuation d'air (112) définies relativement à la première détermination faite dans le local (120, 121) sont comparées avec les données de local de la soupape d'évacuation d'air (112) définies relativement à la deuxième détermination faite dans le local (120, 121).

4. Procédé selon l'une quelconque des revendications 1 à 3, **caractérisé en ce que** ledit système de ventilation comprend en outre au moins un deuxième sous-système (200), lequel deuxième sous-système contient une deuxième unité de ventilation (202), laquelle deuxième unité de ventilation comprend un ventilateur d'évacuation (204), un deuxième conduit d'évacuation d'air (210) relié au ventilateur d'évacuation (204) de la deuxième unité de ventilation (202), les extrémités du deuxième conduit d'évacuation d'air (210) étant amenées jusqu'aux locaux (220, 221) et pourvues d'un soupape d'évacuation d'air (212) ; et **en ce que**, dans ce procédé, les données de local pour les soupapes d'évacuation d'air (212) installées dans les extrémités du deuxième conduit d'évacuation d'air (210) sont déterminées de la manière respective comme étant dans le premier sous-système (100).

5. Procédé selon la revendication 4, **caractérisé en ce que**, dans ce procédé,
- les soupapes d'évacuation d'air (112) appartenant au sous-système (100) sont détectées
- en mettant en marche les ventilateurs d'évacuation (104, 204) de toutes les unités de ventilation (102, 202) appartenant au système de ventilation ;
- en arrêtant le ventilateur d'évacuation (104) de l'unité de ventilation appartenant à un sous-système (100) ;
- en mesurant les différences de pression entre toutes les soupapes d'évacuation d'air (112, 212) appartenant au système de ventilation ou la vitesse d'écoulement de l'air d'évacuation s'écoulant ou s'étant écoulé à travers la soupape d'évacuation d'air (112, 212) ;
- en détectant les soupapes d'évacuation d'air (112, 212), dont la différence de pression ou la vitesse d'écoulement de l'air d'évacuation est proche de zéro, comme appartenant audit un sous-système (100) ; et
- en transférant les identificateurs des soupapes d'évacuation d'air (112) détectées comme appartenant audit un sous-système (100) à l'appareil de commande (122) .

6. Procédé selon la revendication 4, **caractérisé en ce que**, dans ce procédé,
- les soupapes d'évacuation d'air (112) appartenant au sous-système (200) sont détectées
- en arrêtant tout d'abord les ventilateurs d'évacuation (104, 204) de toutes les unités de ventilation (102, 202) appartenant au système de ventilation ;
- en mettant en marche les ventilateurs d'évacuation (104, 204) des unités de ventilation (102, 202) un à la fois ;
- en mesurant les différences de pression entre toutes les soupapes d'évacuation d'air (112, 212) non détectées appartenant au système de ventilation ou la vitesse d'écoulement de l'air d'évacuation s'écoulant ou s'étant écoulé à travers les soupapes d'évacuation d'air (112, 212) non détectées ;
- en détectant les soupapes d'évacuation d'air (112, 212) dont la différence de pression ou la vitesse d'écoulement de l'air d'évacuation est clairement plus grande que zéro, comme appartenant au même sous-système avec le ventilateur d'évacuation (104, 204) mis en marche en dernier ;
- en transférant les identificateurs des soupapes d'évacuation d'air (212) détectées comme appartenant audit sous-système (200) à l'appareil de commande (122) .

7. Procédé selon l'une quelconque des revendications 1 à 6, **caractérisé en ce que** ladite première unité de ventilation (102) comprend en outre un ventilateur d'admission (106) et le premier sous-système (100) comprend en outre un premier conduit d'admission d'air (110) relié au ventilateur d'admission (116), les extrémités du conduit d'admission d'air (110) ayant été amenées jusqu'aux locaux (120, 121) et une soupape d'admission d'air (114) ayant été installée dans ces extrémités, et **en ce que**, dans ce procédé,
- un identificateur d'individualisation est déterminé pour au moins une partie des soupapes d'admission d'air (114) ;
- le ventilateur d'admission (106) de la première unité de ventilation (102) est mis en marche ;
- les soupapes d'admission d'air (114) installées dans le premier conduit d'admission d'air (110) sont réglées dans une première position d'écoulement ;
- des valeurs de pression de référence sont déterminées pour les soupapes d'admission d'air (114) réglées dans la première position d'écoulement en mesurant les différences de pression entre lesdites soupapes d'admission d'air (114) ;
- une soupape d'admission d'air (114) reliée audit conduit d'admission d'air (110) dans le premier local (120) est réglée dans une deuxième position d'écoulement, dans laquelle l'écoulement d'air à travers la soupape est sensiblement plus grand que dans la première position d'écoulement ;
- les différences de pression sont mesurées entre les soupapes d'admission d'air (114) réglées dans la première position d'écoulement et les différences de pression mesurées sont comparées avec les valeurs de pression de référence pour lesdites soupapes d'admission d'air (114) ; et
- les soupapes d'admission d'air (114) réglées dans la première position d'écoulement, dont la différence de pression mesurée s'écarte sensiblement de la valeur de pression de référence, sont déterminées comme des soupapes d'admission d'air (114) dans le même premier local (120), et elles se voient attribuer la même valeur de local que les soupapes d'admission d'air (114) réglées dans la deuxième position d'écoulement ; et
- les identificateurs des soupapes d'admission d'air (114) avec les mêmes données de local sont transmises à l'appareil de commande (122).

8. Procédé selon l'une quelconque des revendications 4 à 7, **caractérisé en ce que** la deuxième unité de ventilation (202) comprend en outre un ventilateur d'admission (206) et le deuxième sous-système (200) comprend en outre un deuxième conduit d'admission d'air (210) relié au ventilateur d'admission (206) de la deuxième unité de ventilation (202), les extrémités du conduit d'admission d'air (210) étant amenées jusqu'aux locaux (220, 221), et une soupape d'admission d'air (214) étant installée dans ces extrémités ; et **en ce que**, dans ce procédé, les données de local pour les soupapes d'admission d'air (214) installées dans les extrémités du deuxième conduit d'admission d'air (210) sont déterminées de la manière respective comme étant dans le premier sous-système (100).

9. Procédé selon l'une quelconque des revendications 4 à 8, **caractérisé en ce que**, dans ce procédé,
- les soupapes d'admission d'air appartenant au sous-système (100) sont détectées
- en mettant en marche tous les ventilateurs d'admission (106, 206) de toutes les unités de ventilation (102, 104) appartenant au système de ventilation ;
- en arrêtant le ventilateur d'admission (106) de l'unité de ventilation (102) appartenant à un sous-système (100) ;
- en mesurant les différences de pression entre toutes les soupapes d'admission d'air (114, 214) non détectées appartenant au système de ventilation ou la vitesse d'écoulement de l'air d'évacuation s'écoulant ou s'étant écoulé à travers les soupapes d'admission d'air (114, 214) non détectées ;
- en détectant les soupapes d'admission d'air (114, 214), dont la différence de pression ou la vitesse d'écoulement de l'air d'évacuation est proche de zéro, comme appartenant audit un sous-système (100) ; et
- en transférant les identificateurs des soupapes d'admission d'air (114) détectées comme appartenant audit un sous-système (100) à l'appareil de commande (122) .

10. Procédé selon l'une quelconque des revendications 4 à 8, **caractérisé en ce que**, dans ce procédé,
- les soupapes d'admission d'air (114, 214) appartenant au sous-système (200) sont détectées
- en arrêtant tout d'abord tous les ventilateurs d'admission (106, 206) des unités de ventilation (102, 202) appartenant au système de ventilation ;
- en mettant en marche les ventilateurs d'admission (106, 206) des unités de ventilation (102, 202) un à la fois ;
- en mesurant les différences de pression entre toutes les soupapes d'admission d'air (114, 214) non détectées appartenant au système de ventilation ou la vitesse d'écoulement de l'air d'admission s'écoulant ou s'étant écoulé à travers les soupapes d'admission d'air (114, 214) non détectées ;
- en détectant les soupapes d'admission d'air (114, 214), dont la différence de pression ou la vitesse d'écoulement de l'air d'admission est clairement plus grande que zéro, comme appartenant au même sous-système avec le ventilateur d'admission (106, 206) mis en marche en dernier ;
- en transférant les identificateurs des soupapes d'admission d'air (214) détectées comme appartenant audit un sous-système (100, 200) à l'appareil de commande (122).

11. Procédé selon l'une quelconque des revendications 5 à 10, **caractérisé en ce que** la détection des soupapes d'évacuation d'air (112, 212) et/ou des soupapes d'admission d'air (114, 214) comme appartenant à un sous-système (100, 200) est faite avant la détermination des données de local pour les soupapes (112, 212, 114, 214).

12. Procédé selon l'une quelconque des revendications 1 à 11, **caractérisé en ce que** le réglage des soupapes d'évacuation d'air (112, 212) et/ou des soupapes d'admission d'air (114, 214) appartenant au système de ventilation dans la première position d'écoulement et dans la deuxième position d'écoulement et la marche des ventilateurs (104, 204, 106, 206) des unités de ventilation (102, 202) sont commandés par l'appareil de commande (122) appartenant au système.

13. Procédé selon l'une quelconque des revendications 1 à 12, **caractérisé en ce que**
- au lieu de la valeur de pression de référence, une valeur de vitesse de référence est déterminée pour les soupapes d'évacuation d'air (112, 212) réglées dans la première position d'écoulement en mesurant la vitesse d'écoulement de l'air d'évacuation s'écoulant ou s'étant écoulé à travers la soupape ;
- le réglage, tour à tour, dans chaque local (120, 121, 220, 221) d'une soupape d'évacuation d'air (112, 212) reliée au conduit d'évacuation d'air (108, 208) dans la deuxième position d'écoulement, l'écoulement d'air à travers la soupape étant sensiblement plus grand que dans la première position d'écoulement ;
- au lieu de la valeur de pression de référence, la vitesse d'écoulement de l'air d'évacuation s'écoulant ou s'étant écoulé à travers les soupapes d'évacuation d'air (112, 212) dans la première position d'écoulement est mesurée et la vitesse d'écoulement mesurée est comparée avec les valeurs de vitesse de référence pour les soupapes d'évacuation d'air (112, 212) ; et
- les soupapes d'évacuation d'air (112, 212) dans la première position d'écoulement, dont la vitesse d'écoulement mesurée s'écarte sensiblement de la valeur de vitesse de référence, sont déterminées comme étant des soupapes dans le premier local (120, 121, 220, 221) avec la soupape d'évacuation d'air (112, 212) dans la deuxième position d'écoulement, et elles se voient attribuer la même valeur de local que la soupape d'évacuation d'air dans la deuxième position d'écoulement ; et
- les identificateurs des soupapes d'évacuation d'air (112, 212) avec les mêmes données de local sont transmises à l'appareil de commande (122).

14. Procédé selon l'une quelconque des revendications 7 à 13, **caractérisé en ce que**
- au lieu de la valeur de pression de référence, une valeur de vitesse de référence est déterminée pour les soupapes d'admission d'air (114, 214) réglées dans la première position d'écoulement en mesurant la vitesse d'écoulement de l'air d'admission s'écoulant ou s'étant écoulé à travers ces soupapes ;
- une soupape d'admission d'air (114, 214) reliée au premier conduit d'admission d'air (110, 210) est réglée tour à tour dans chaque local (120, 121, 220, 221) dans la deuxième position d'écoulement, l'écoulement d'air à travers la soupape étant sensiblement plus grand que dans la première position d'écoulement ;
- au lieu de mesurer la différence de pression, la vitesse d'écoulement de l'air d'évacuation s'écoulant ou s'étant écoulé à travers les soupapes d'admission d'air (114, 214) dans la première position d'écoulement est mesurée et la vitesse d'écoulement mesurée est comparée avec les valeurs de vitesse d'écoulement de référence pour les soupapes d'admission d'air (114, 214) ; et
- les soupapes d'admission d'air (114, 214) dans la première position d'écoulement, dont la vitesse d'écoulement mesurée s'écarte sensiblement de la valeur de vitesse de référence, sont déterminées comme des soupapes étant dans le premier local (120, 121, 220, 221) avec la soupape d'admission d'air (114, 214) dans la deuxième position d'écoulement, et elles se voient attribuer la même valeur de local que la soupape d'admission d'air dans la deuxième position d'écoulement ; et
- les identificateurs des soupapes d'admission d'air (114, 214) avec les mêmes données de local sont transmises à l'appareil de commande (122).

15. Procédé selon l'une quelconque des revendications 1 à 12, **caractérisé en ce que** l'ouverture d'écoulement d'air est fermée essentiellement entièrement dans les soupapes d'évacuation d'air (112, 212) et/ou dans les soupapes d'admission d'air (114, 214) réglées dans la première position d'écoulement.

16. Système de ventilation d'un groupe de locaux, ce système comprenant un appareil de commande (122) pour commander le fonctionnement de ce système, au moins un sous-système (100, 200), lequel sous-système (100, 200) comprend une unité de ventilation (102, 202) avec un ventilateur d'évacuation (104, 204), un conduit d'évacuation d'air (108, 208), relié au ventilateur d'évacuation (104, 204), les extrémités du conduit d'évacuation d'air (108, 208) ayant été amenées jusqu'aux locaux du premier groupe (120, 121, 220, 221) et une soupape d'évacuation d'air motorisée (112, 212) ayant été installée dans ces extrémités, **caractérisé en ce que**
- les soupapes d'évacuation d'air (112, 212) sont pourvues d'un identificateur individualisant la soupape ;
- l'appareil de commande (122) a une mémoire pour enregistrer des données liées aux soupapes dans le système ;
- l'appareil de commande (122) exécutant les étapes du procédé selon l'une quelconque des revendications 1 à 15 ;
- et **en ce que**
- le système de ventilation comprend en outre
- des éléments de mesure de pression pour mesurer la différence de pression affectant la soupape d'évacuation d'air et/ou un indicateur d'écoulement pour mesurer la vitesse d'écoulement de l'air d'évacuation ; et
- une connexion de transmission de données (124) pour transférer des instructions de commande venant de l'appareil de commande (122) aux soupapes et pour transférer les données de mesure venant des soupapes à l'appareil de commande (122).

17. Système de ventilation selon la revendication 16, **caractérisé en ce que**
- ladite unité de ventilation (102, 202) a en outre un ventilateur d'admission (106, 206) ;
- un conduit d'admission d'air (110, 210) relié au ventilateur d'admission (106, 206), les extrémités du conduit d'admission d'air (110, 210) ayant été amenées jusqu'aux locaux du groupe de locaux (120, 121, 220, 221), et une soupape d'admission d'air motorisée (114, 214) ayant été installée dans ces extrémités ;
- les soupapes d'admission d'air (114, 214) ont un identificateur individualisant la soupape ; et
- le système de ventilation comprend en outre des éléments de mesure de pression pour mesurer la différence de pression affectant la soupape d'évacuation d'air et/ou un indicateur d'écoulement pour mesurer la vitesse d'écoulement de l'air d'admission.
